# EUROPEAN PATENT SPECIFICATION

(11) **EP 0 789 146 B1**
(45) Date of publication and mention of the grant of the patent: **10.04.2002**
(21) Application number: 96925119.8
(22) Date of filing: 29.07.1996
(51) Int. Cl.: F04B 43/02

(54) **MICROVALVE AND METHOD OF MANUFACTURING THE SAME, MICROPUMP USING THE MICROVALVE AND METHOD OF MANUFACTURING THE SAME, AND APPARATUS USING THE MICROPUMP**
MIKROVENTIL UND METHODE ZU DESSEN HERSTELLUNG, MIKROPUMPE DIE DIESES MIKROVENTIL BENUTZT UND METHODE ZU IHRER HERSTELLUNG, SOWIE VORRICHTUNG, DIE DIESE MIKROPUMPE VERWENDET
MICROSOUPAPE ET SON PROCEDE DE REALISATION, MICROPOMPE UTILISANT CETTE MICROSOUPAPE, ET SON PROCEDE DE REALISATION, ET DISPOSITIF UTILISANT CETTE MICROPOMPE

(30) Priority: 27.07.1995 JP 19228595
(43) Date of publication of application: 13.08.1997
(73) Proprietor: SEIKO EPSON CORPORATION, Tokyo 163 (JP)
(72) Inventor: FUNASAKA, Tsukasa Seiko Epson Corporation, Nagano-ken 392 (JP); FUJIMORI, Takayoshi Seiko Epson Corporation, Nagano-ken 392 (JP); MIYAZAKI, Hajime Seiko Epson Corporation, Nagano-ken 392 (JP)
(74) Representative: Hoffmann, Eckart, Dipl.-Ing.
(86) International application number: JP9602129
(87) International publication number: WO9705385

(56) References cited:
- EP-A- 0 568 902
- WO-A-93/20351
- DE-A- 4 445 686
- JP-A- 4 066 784
- JP-T- 3 505 771
- JP-T- 5 502 079

## Description

### Technical Field

The present invention applies to minute processing and joining (bonding) such as micromachining, and relates to a microvalve that controls the rate of flow of a fluid, and its fabrication method. Further, it relates to a micropump that incorporates this microvalve, and its fabrication method. Furthermore, it relates to a device that uses this micropump.

### Background Technology

As conventional microvalves and micropumps, such as in JP-A-3-199682, input valves and output valves are formed from a silicon thin film plate. A drive diaphragm is formed between these two valves, and this drive diaphragm is configured such that it is anodally joined (bonded) to a glass substrate. Further, by taking out one valve part from this micropump, it may also be used as a microvalve.

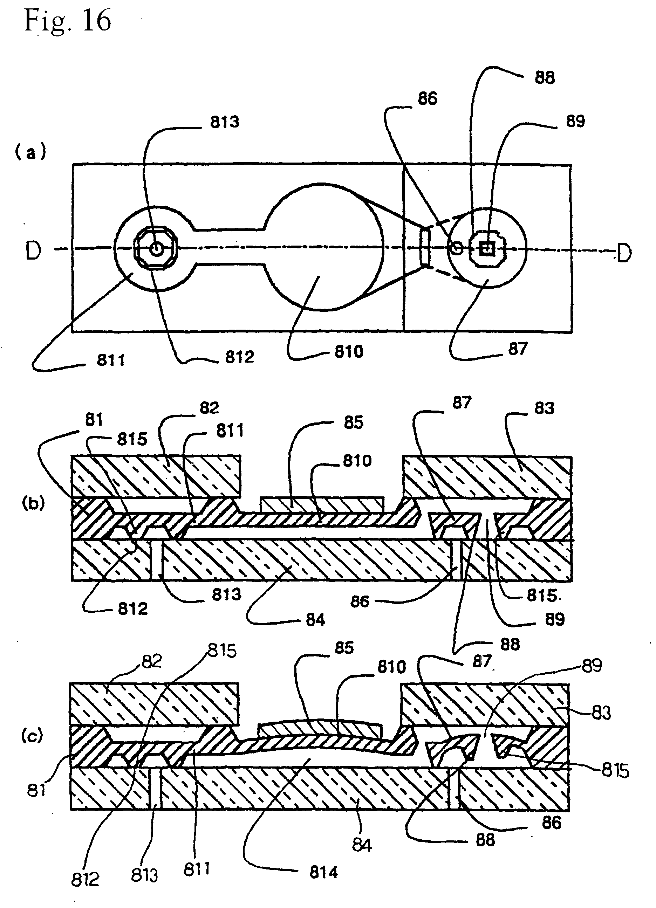

Further, Figs. 16(a)-(c) show a conventional micropump incorporating a microvalve; Fig. 16(a) is the bottom plane view, Fig. 16(b) is a cross-sectional view along D-D in Fig. 16(a), in a stationary condition, and (c) is a cross-sectional view along D-D in Fig. 16(a), in a suction state.

The micropump shown in Figs. 16 (a) and (b) is equipped with a structure in which an output elastic diaphragm 811 is provided on a silicon substrate 81. The output valve is has an output valve projection 815 that is moved with the vertical motion of the drive elastic diaphragm 810, and an output seal part 812 that opens/closes the valve. The drive elastic diaphragm 810 is designed such that it bends vertically, by applying an electrical field to the piezoelectric element 85, that is adhered via an electrode on its upper surface. The input valve is configured from an input diaphragm 87, an input valve protrusion 815, an input valve seal 88, and a hole 89. Fluid entering from the entry port 86 escapes to hole 89, and is discharged from the exit port 813, passing through the input valve seal 88, the chamber 814, and the output seal part 812. To the silicon substrate 81, the glass substrates 82, 83, and 84 are joined.

A voltage applied to the piezoelectric element 85 in the micropump shown in Fig. 16(c) forces the drive elastic diaphragm 810 in an upward direction. Accordingly, negative pressure (suction) results within the chamber 814, and a force occurs that forces the input elastic diaphragm 87 upward. Simultaneously with this, the input valve seal part 88 is raised, and fluid from the entry port 86 is sucked in.

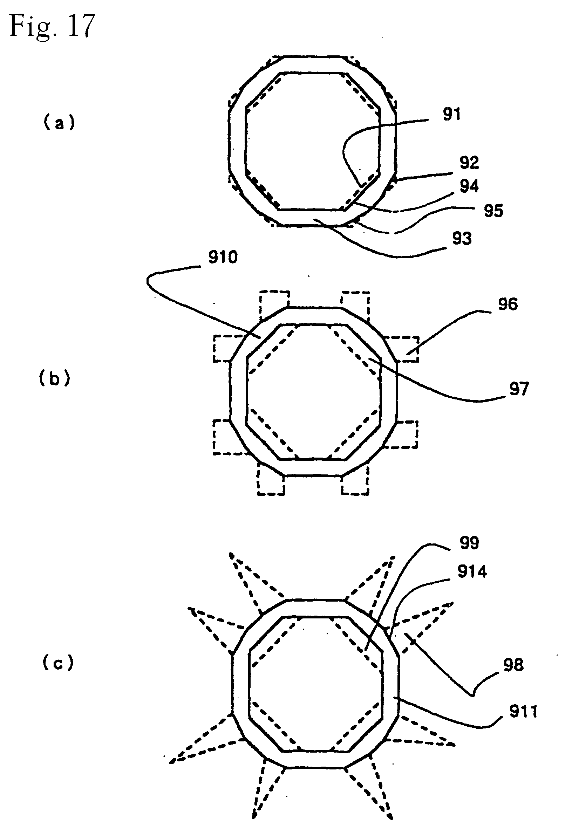

One example of a mask pattern used for forming the valve seal part in this kind of micropump can be found in JP-B-45-17988. At a desired position of this mask pattern, a correction pattern is formed. As a result of this, highly accurate patterning can be performed. Figs. 17(a)-(c) are views of the mask pattern (shown as a dotted line) referred to in this publication, and, in accordance with this, of the patterned valve seal part (shown as a solid line). Moreover, the valve seal shown in Figs. 17(a)-(c) is formed by etching of the silicon substrate; however, as for the etching, generally, anisotropic etching is performed, taking into consideration the planar smoothness of the etching plane. In this, as representative etchants, for example, a KOH solution and a TMAH solution are known. Moreover, valve seal parts 93, 910 and 911 have the same shape.

Using the correction pattern part, denoted by symbol 91 of the mask pattern shown in Fig. 17(a), as a mask, the etched part retreats at a 45° angle by side etching; after etching, a shape results that is denoted by reference numeral 94. Further, using the correction pattern part, denoted by reference numeral 95 of the mask pattern, as a mask, the etched part, by a liquid etching composition, retreats at an angle of about 27 degrees by side etching; after etching, a shape results that is denoted by reference numeral 92. Moreover, reference numeral 93 denotes the valve seal part.

In the same way in Fig. 17(b) as well, the valve seal part 910 is formed by a mask pattern formed by correction pattern parts 96 and 97. Further, in the same way in Fig. 17(c) as well, the valve seal part 911 is formed by a mask pattern formed by correction pattern parts 98 and 99.

However, in the side etching performed when forming these valve seal parts, because the side etching angles of the silicon substrate are different according to part position, a part having a wide width and a part having a narrow width are formed in the valve seal part. Accordingly, a valve seal part equipped with a uniform width (throughout) the entire body cannot be formed, which is a problem. In particular, when the etching depth is deep, in conjunction with this, the side etching is also large; because of this, a part occurs in which the width of the valve seal part is narrow to the extent that it interferes with its function, which is a problem. As a result, this is currently dealt with by creating a part at the valve seal part in which the width is sufficiently wide. Moreover, in the present invention, "the width of the valve seal part", means the width of the contact part between the valve seal part and the holding substrate or elastic diaphragm.

In the microvalve, when there is a part having a thick width in the valve seal part, the flow path (channel) resistance becomes great, so that a great loss of pressure results, and defects occur such as that the fluid velocity becomes slow. Further, when the valve is (switched) opened and closed by an abrupt change in pressure, because of the abrupt change in pressure between the valve seal part and the holding substrate, air bubbles occur, which is also a problem (cavitation develops). Specifically, such as in the case of a microvalve shown in Figs. 16(a)-(c), at the instant that the input elastic diaphragm is forced upward, the input valve seal part 88 abruptly becomes exposed to negative pressure. Because of this, in the case of a valve having a width that is equal to or greater than a certain constant width (such as in a case exceeding a width of 60µm), air bubbles occur in the input valve seal part 88 at normal temperatures. In particular, this kind of cavitation development frequently tends to occur at high temperatures.

Further, in a case in which the valve is formed by anisotropic etching, it is easily possible by side etching to have a part in which the valve width is narrow and a part in which the valve width is wide. The shape of the valve seal part is determined by the valve depth (etching depth), and the width of the valve seal part cannot be formed equal to or below a certain constant value, which is a problem. Specifically, for example, when the valve depth is defined as 40 µm, and when anisotropic etching is performed with a common KOH solution or the like, a valve cannot be formed having a maximum width that is roughly equal to or less than 40 µm. In a micropump, when the flow path resistance is great, fluid velocity during priming is low, so that it is difficult for air bubbles to escape. Further, because air bubbles occur due to decreased pressure when driving the piezoelectric element, air bubbles accumulate within the chamber, the rate of discharge flow decreases, and, finally, discharge becomes impossible, which is a problem.

EP-A-O 568 902 discloses a micropump using a microvalve according to the pre-characterizing portion of claim 1. A miropump using a microvalve in which a gap of 10 µm or less is formed between a valve seal part and a holding substrate in the stationary state is disclosed in WO 90/12209.

### Summary of the Invention

It is an obeject of the present invention to solve these types of conventional problems, and to provide a microvalve and a method to manufacture the microvalve in which it is possible, under a normal environment, and also when driving under a high temperature environment, to have no occurrence of cavitation development, and in which a stabilized rate of flow can be obtained.

It is another object of the invention to provide a micropump using the microvalve and its fabrication method.

Still another object of the invention is to provide a medical device and analyzing instrument that use the micropump.

These objects are achieved with a microvalve as claimed in claim 1, its manufacturing method as claimed in claims 6 and 8, a micropump as claimed in claim 11, a method of manufacturing the micropump as claimed in claim 13 and a device using the micropump as claimed in claim 14, respectively. Preferred embodiments of the invention are subject-matter of the dependent claims.

In a microvalve according to the invention, it is further preferable if the width of the contact part is defined as 0.2 µm - 20 µm. When the width of the contact part exceeds 50 µm, although there is no interference in its function as a microvalve, the fluid resistance cannot be made small to a target value, and when negative pressure is received abruptly during operation of the microvalve, it is difficult to suppress the occurrence of air bubbles. Further, it is also difficult to make the fluid velocity rapid.

Furthermore, by the valve protrusion being equipped with the valve seal part at its distal end (tip), and a step being formed between said distal end and the base end, because it is possible to configure the valve protrusion smaller, a microvalve is obtained having a valve protrusion of high strength. This step can be defined as equal to or less than 10 µm, and it is further preferable if it is defined as 1 µm - 5 µm. This allows a microvalve to be obtained having a small fluid resistance, while reliably holding a valve protrusion of high strength.

Further, it is possible to have a microvalve according to the present invention in which the support substrate, elastic diaphragm, valve protrusion and valve seal part are formed from an integral silicon substrate, and the holding substrate is formed from a glass substrate. Or, it is possible to have a microvalve in which the support substrate and elastic diaphragm are formed from an integral silicon substrate, and the holding substrate, valve protrusion and valve seal part are formed from an integral glass substrate. As a result, the processing is further simplified, and a microvalve is obtained having a higher accuracy.

In the fabrication method, it is possible to form a nonconjugative film between the surface of the other side of said first processed substrate, and said second protective film, and, by selectively etching this nonconjugative film, leaving the nonconjugative film on the part of said first processed substrate capable of joining the valve seal part. Further, a monocrystalline silicon substrate can be used for the first processed substrate, and the second processed substrate can be composed from glass substrate.

Furthermore, the present invention provides a micropump equipped with an input part equipped with an input valve, a drive part equipped with a drive diaphragm, and an output part equipped with an output valve, in which the input valve is composed of any one of the microvalves referred to above.

There is no occurrence of air bubbles in this micropump, and it is possible to suck-in/discharge a constant amount and a minute amount of fluid with a high degree of accuracy.

Further, the input valve may be configured with the drive diaphragm and the output valve being integrally formed of monocrystalline silicon substrate.

Furthermore, the present invention provides a micropump fabrication method in which an input part equipped with an input valve, the drive part equipped with a drive diaphragm, and an output part equipped with an output valve, the micropump fabrication method being provided that constructs the input valve by any of the fabrication methods of the microvalves referred to above.

Furthermore, the present invention provides a device equipped with a tank that accommodates fluid, a micropump according to the present invention connected to the tank and suckingin/discharging said fluid, drive means that drive said micropump, and control means that control said drive means.

### BRIEF DESCRIPTION OF THE DRAWINGS

- Fig. 1(a): is a view of the bottom of the diaphragm part of a first microvalve.
- Fig. 1(b): is a cross-sectional view showing a stationary state of the first microvalve.
- Fig. 1(c): is a cross-sectional view showing a state in which negative pressure has occurred at the exit side of the microvalve shown in Fig. 1(b).
- Fig. 2: shows the results of investigation of the relation between the length (µm) of the gap 17 in the case that the micropump includes the first microvalve, and the flow amount reduction rate (%) of the fluid.
- Fig. 3(a): through Fig. 3(d) are cross-sectional views showing the process of fabricating the microvalve shown in Fig. 1.
- Fig. 4(a): is a view of the base of the diaphragm of a second microvalve according to preferred embodiment 1 of the present invention.
- Fig. 4(b): is a cross-sectional view of a microvalve showing a stationary state (a state in which pressure has not been applied).
- Fig. 5: shows the relation between the valve seal width (µm) of the microvalve and the air bubble occurrence temperature (°C) in cavitation development according to preferred embodiment 1.
- Fig. 6(a): is a view of the base of the diaphragm part of the microvalve according to the preferred embodiment 2 of the present invention.
- Fig. 6(b): is a cross-sectional view of a microvalve showing a stationary state (a state in which pressure has not been applied).
- Fig. 7(a): through Fig. 7(f) are cross-sectional views showing the process of fabricating the microvalve shown in Figs. 6(a)-(b).
- Fig. 8(a): is a view of the base of the diaphragm part of the microvalve according to preferred embodiment 3 of the present invention.
- Fig. 8(b): is a view of the cross-section B-B in Fig. 8(a).
- Fig. 9(a): through Fig. 9(d) are cross-sectional views showing the process of fabricating the microvalve shown in Fig. 8.
- Fig. 10(a): through Fig. 10(c) are views of the base of the diaphragm part of the microvalve according to another preferred embodiment.
- Fig. 11: is a view of a micropump according to preferred embodiment 4 of the present invention.
- Fig. 12(a): is a view of the base of the micropump shown in Fig. 11.
- Fig. 12(b): is a view of the cross section C-C of Fig. 11(a), in the stationary state.
- Fig. 12(c): is a view of the cross-section C-C of Fig. 11(a) in the fluid intake state.
- Fig. 13: is a specific block diagram of a micropump unit according to the preferred embodiment 4.
- Fig. 14(a): shows the pulse of the drive signal output from the control IC of the micropump unit according to the preferred embodiment 4.
- Fig. 14(b): shows the pulse of another drive signal output from the control IC of the micropump unit according to the preferred embodiment 4.
- Fig. 15: is a view of the micropump unit according to another preferred embodiment of the present invention.
- Fig. 16(a): is a view of the base of the diaphragm part of a conventional microvalve.
- Fig. 16(b): is a view of the cross section D-D of Fig. 16(a) in the stationary state.
- Fig. 16(c): is a view of the cross section D-D of Fig. 16(a) in the intake state.
- Fig. 17: is a view of a conventional mask pattern (shown as a dotted line) and a valve seal part (shown as a solid line) patterned by the mask pattern.

### DETAILED DESCRIPTION OF PREFERRED EMBODIMENTS

The invention is explained below in detail with reference to the attached drawings.

### (First microvalve)

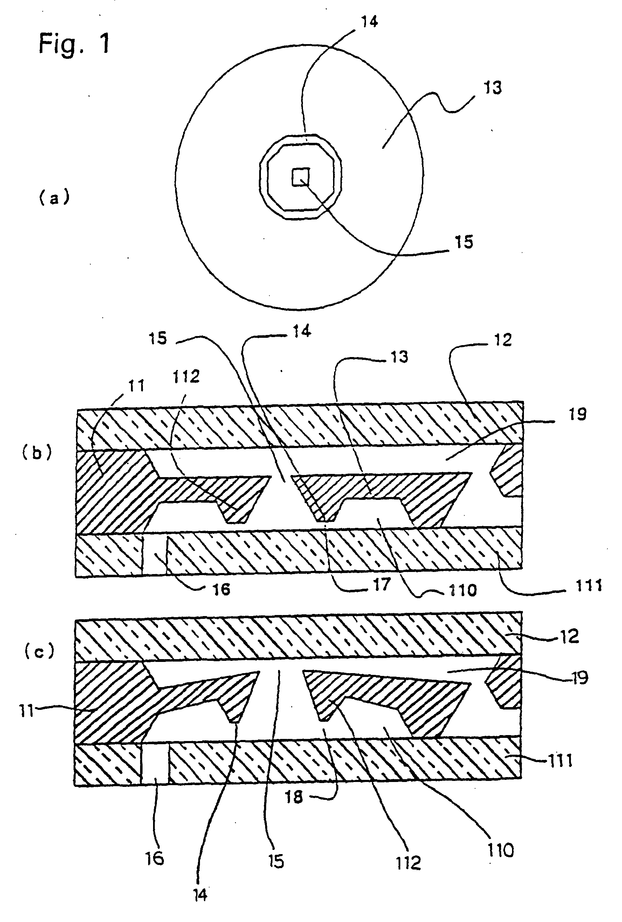

Fig. 1(a) is a view of the base of the diaphragm part of a first microvalve. Fig. 1(b) is a cross-sectional view of the microvalve, showing the stationary state, that is, the state in which pressure is not applied. Fig. 1(c) is a cross-sectional view showing the state in which negative pressure has occurred at the exit side of the microvalve shown in Fig. 1(b). Moreover, the term microvalve as used in the present specification refers to a valve size of about 5mm or less in terms of its diameter.

The microvalve shown in Fig. 1(a) to Fig. 1(c) comprises a glass substrate 111, which is the holding substrate, a support substrate 11 held on the glass substrate 111, an elastic diaphragm 13 supported by the support substrate 11, a valve protrusion 112 provided on the elastic diaphragm 13, a glass substrate 12 provided at a position opposing the glass substrate 111, and joined to the support substrate 11, an entry side valve chamber 110 formed between the glass substrate 111 and the elastic diaphragm 13, and an exit side valve chamber 19 formed between the glass substrate 12 and the elastic diaphragm 13.

An entry 16, through which fluid enters the microvalve, is formed as penetrating the glass substrate 111. The support substrate 11 is formed from a silicon substrate, and is anodally joined to the glass substrates 111 and 12.

The elastic diaphragm 13 has roughly a disk-shape, and is integrally formed with the support substrate 11. This elastic diaphragm 13 is designed so that it moves vertically corresponding to the difference in pressure between the output side valve chamber 19 and the entry side valve chamber 110. Further, at the center of the elastic diaphragm 13, a fluid path is formed extending through the hole 15. On the side of the elastic diaphragm 13 facing the glass substrate 111 (hereafter, in the preferred embodiments, this side is referred to as the lower side), on the outer peripheral part of the hole 15, a tapered valve protrusion 112 is formed gradually narrowing toward the distal end side. The distal end surface of this valve protrusion 112 defines a valve seal part 14. On the surface of the valve seal part 14 a protective film such as an oxide film or an etched film is formed such that during anodic joining it is not joined to the glass substrate 111. Moreover, in this first microvalve, the width of the valve seal part 14 is set at about 100 µm. As shown in Fig. 1(c) a prescribed gap 17 is formed between this valve seal part 14 and the glass substrate 111, in particular, when the microvalve is in a stationary state. Further, in the case that the exit side is under negative pressure, as shown in Fig. 1 (c), the elastic diaphragm 13 is moved so that it is deformed toward the upper side, and the gap 18 formed between the glass substrate 111 and the valve seal part 14 in this state is wider than the gap 17.

With a thus constructed microvalve, when the pressure of the exit side valve chamber 19 is smaller than the pressure of the entry side valve chamber 110, a certain fixed quantity of fluid flows while the state shown in Fig. 1(b) changes to the state shown in Fig. 1(c). During this movement period, negative pressure occurs at the gap 17. When the pressure of the exit side valve chamber 19 is higher than the pressure of the entry side valve chamber 110, the elastic diaphragm 13 is forced downward toward the glass substrate 111, and the valve seal part 14 abuts on the glass substrate 111, the gap 17 disappears, and the fluid stops flowing from the exit side. That is, a one-way (unidirectional) valve is formed.

In the microvalve, in order that the fluid does not flow backward, it is desirable that this gap 17 be narrow. In the stationary state, when the relationship is investigated between the width of the gap 17 (the distance from the surface of the glass substrate 111 to the valve seal part 14), and reverse flow development of the liquid, when the gap 17 exceeds 10µm, reverse flow development is seen. Further, when the gap 17 is less than 0.2µm, in a high temperature equal to or above about 60°C, cavitation development is seen.

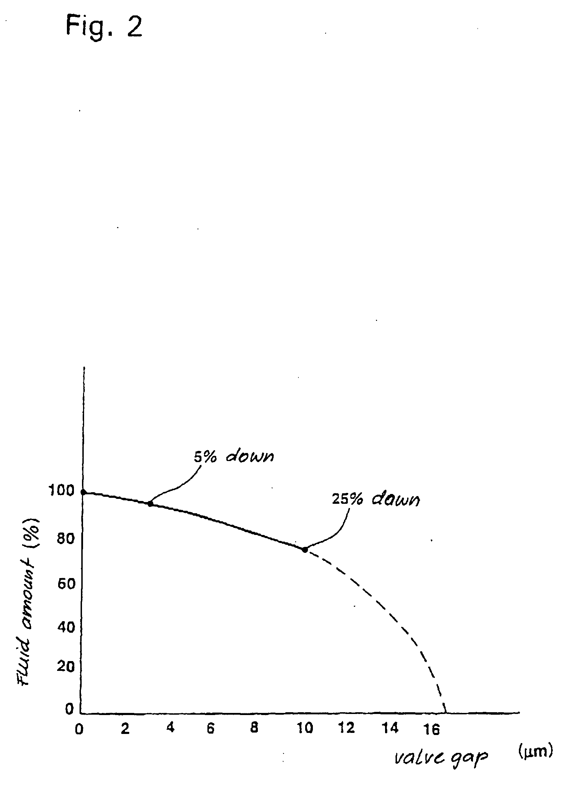

Further, for a micropump using this microvalve the relationship has been investigated between the length of the gap 17 (µm) and the flow amount reduction rate of the fluid (%). The results are shown in Fig. 2.

From these results, it is desirable that, in the stationary state, the gap 17 is no less than 0.2 µm and no more than 10 µm.

In this kind of microvalve structure, cavitation development does not occur even when the width of the valve seal part 14 exceeds 50 µm.

Further, this kind of microvalve structure has an advantage in that the valve protrusion 112 has the above-described taper shape, so that it has a high degree of hardness and is difficult to bend.

Furthermore, the flow resistance in this microvalve is small, so that the pressure loss is small and the flow rate of this pump is high. Furthermore, during an abrupt reduction in pressure, the reduction of pressure in the valve seal part is small so that the occurrence of air bubbles can be prevented. Further, due to the existence of the gap, dust and the like is not trapped in the valve seal part, so that the problem does not occur that the valve will not close.

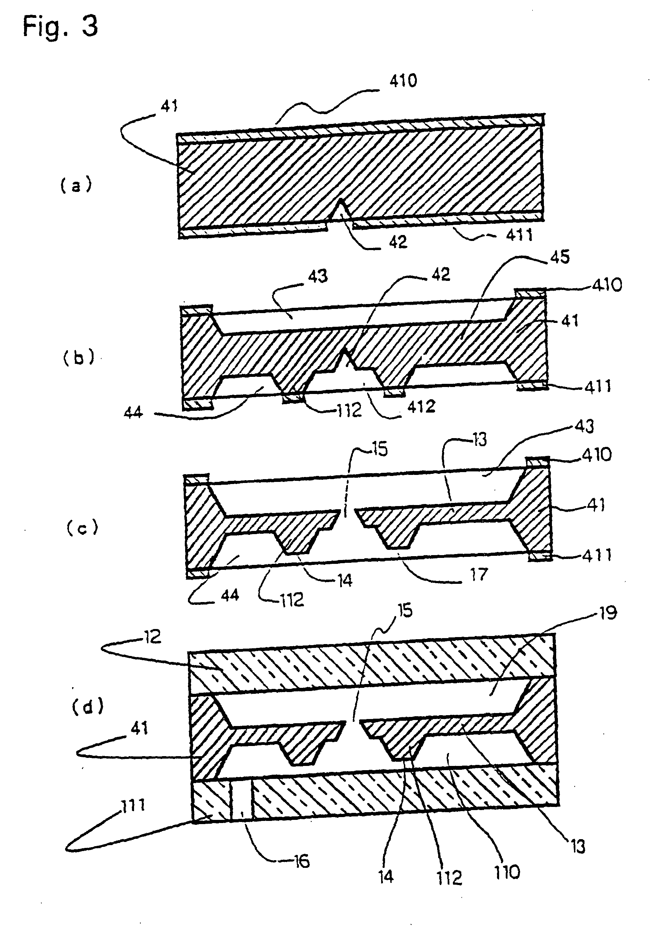

Next, the fabrication method for the microvalve shown in Fig. 1(a) to Fig. 1(c) will be explained along with the process shown in Fig. 3(a) through Fig. 3(d). Moreover, in the present preferred embodiment, the case is explained in which anisotropic etching is performed using a KOH solution, on a surface (100) of a monocrystalline silicon substrate.

In the process shown in Fig. 3(a), on the surface plane of the silicon substrate 41, a thermal oxide film is formed. Next, by photolithography, on the bottom side, which is the surface side, afterward, a patterning is performed removing the thermal oxide film at the position corresponding to the center part of the elastic diaphragm 13. Moreover, a width of 40 µm of the thermal oxide film is removed. By doing this, etching of the protective film 410 is performed on the upper side surface of the silicon substrate 41, and etching of the protective film 411 is performed on the bottom side surface. Then, using the protective films 410 and 411 as masks, anisotropic etching is performed on the silicon substrate 41, and a hole 42 formed. This hole 42 is etched at a constant angle relative to the depth direction so that a V-shaped (square cone) structure is formed and etching stops at a depth equal to or above a certain depth. In this preferred embodiment, the width of the part of the protective film 411 that is removed is 40 µm, so that etching is stopped at a depth of 28 µm.

Next, in the process shown in Fig. 3(b), a prescribed patterning is performed on the protective films 410 and 411 formed in Fig. 3(a); afterward, the protective films 410 and 411, as formed other than in the regions corresponding to the parts of the support substrate part 11 and the valve seal part 14, are removed. Next, etching is performed, using the remaining protective films 410 and 411 as masks, and a top etching part 43, and bottom etching parts 44 and 412 are formed. At this time, by etching the bottom etching part 412, etching progresses also within the hole 42.

Then, in the process shown in Fig. 3(c), protective film 411, formed on the region corresponding to the part that is the valve seal part 14, is further removed. Next, using the remaining protective films 410 and 411 as masks, etching is performed, forming a gap 17. At this time, there is a result that etching is further advanced as well by the etching of the part etched in the process shown in Fig. 3(b), and hole 15 is formed to penetrate the silicon substrate 41. By doing this, the support substrate 11 shown in Fig. 1(a) and Fig. 1(b), the elastic diaphragm 13, the valve protrusion 112, and the valve seal part 14 are formed integrally from the same silicon substrate. After that, an oxide film is formed on the surface of the valve seal part 14. This oxide film, at the time of anodic joining, serves its purpose of being a nonconjugative, such that the glass substrate 111 and the valve seal part 14 are not connected.

Next, in the process shown in Fig. 3(d), the glass substrate 111, in which the entry 16 is formed, is anodally joined to the lower side and the glass substrate 12 to the upper side of the silicon substrate 41 obtained by the process shown in Fig. 3(c). This anodic joining with the silicon substrate 41 as the cathode, and the glass substrates 111 and 12 as the anodes, is performed while heating to from 300°C to 400°C and applying a high voltage of a 500 V level.

In this way, a microvalve according to this preferred embodiment can be formed by a process identical to etching, so that the fabrication process is simple. Further, as a special surface process is not necessary, defects in flow path also do not occur.

Moreover, in this preferred embodiment, the case with regard to the use of KOH liquid as an etchant was explained; however, the embodiment is not limited to this; TMAH solvent and the like, and other composite materials, may also be used. Further, in this preferred embodiment, an oxide film is used as a protective film; however, the embodiment is not limited to this. Any film may be employed if capable of being used for etching of the mask, for example, a nitride film or a film such as a metal film, and the like, and other composite films may be used.

Furthermore, in this preferred embodiment, an oxide film is used as the nonconjugative film created on the valve seal part 14; however, the embodiment is not limited to this; for example, the function of the valve seal part 14 is not lost with nitride film or the like, and, when the joining of the glass substrate 111 to the valve seal part 14 can be prevented, other created films may be used.

Further, this nonconjugative film, instead of being provided on the valve seal part 14, may be provided on the glass substrate 111 at the position at which the valve seal part 14 is located.

### (Preferred embodiment 1)

Next, a microvalve according to a preferred embodiment 1 of the invention is explained as shown in the figures.

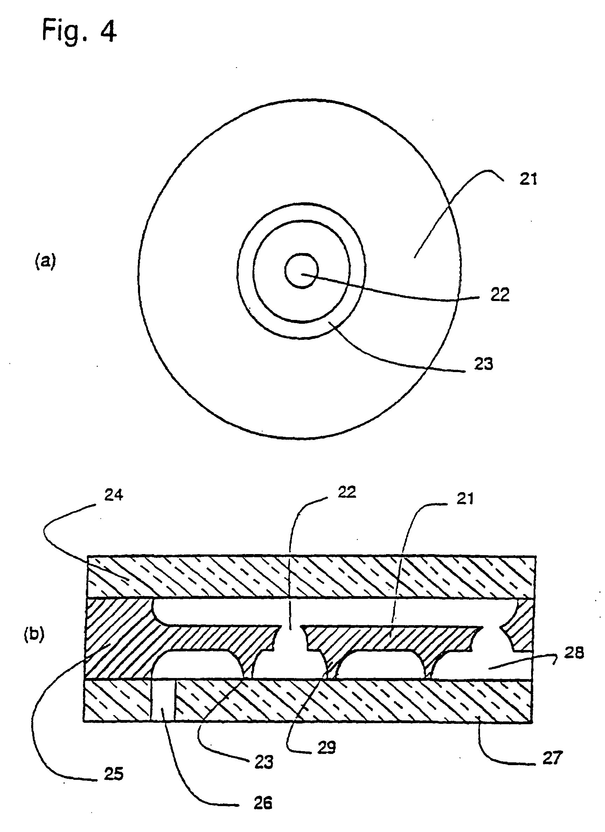

Fig. 4(a) is a bottom plan view of the diaphragm part of a microvalve according the preferred embodiment 1 of the present invention. Fig. 4(b) is a cross-sectional view of a microvalve in a stationary state, that is, the state in which pressure is not applied. Moreover, a microvalve of this preferred embodiment 1 is formed by isotropic etching using a hydrofluoric acid solution instead of that used for the first microvalve.

The points in a microvalve structure according to this preferred embodiment 1 that are different from the structure of the first microvalve are that, in a stationary state, the valve seal part 23 is in contact with the glass substrate 27, the width of the valve seal part 23 is narrow, and, by being formed by isotropic etching, the etching surface becomes rounded. Moreover, in the preferred embodiment 1, a detailed explanation is omitted when difference has occurred in the material, with regard to the form of the first microvalve, simply by different etching methods, and when the material is provided with an identical shape.

The elastic diaphragm 21 of the microvalve shown in Fig. 4(a) and Fig. 4(b) is provided with roughly a disk shape, formed integrally with the support substrate 25 from a monocrystalline silicon substrate. This elastic diaphragm 21, as it is formed by performing isotropic etching on the silicon substrate, has its edge part (the part formed by isotropic etching) as compared to the edge part of the elastic diaphragm 13 obtained in the case of the first microvalve, formed with a rounded belt. Further, the valve seal part 23 provided on this elastic diaphragm 21, by the effect of isotropic etching, is formed in a ring shape as shown in Fig. 4(a), and the flow path of the fluid through the hole 22 is also formed as a circle in the same way. From this, in order for the etching to proceed isotropically (with regard to the horizontal direction, side etching performed in a 1 to 1 (ratio)), first, by fabricating a mask for etching, taking into consideration the amount of this side etching, the width of the valve seal part 23 can be processed to a narrow width of 10 µm. That is, by the use of isotropic etching, a valve seal part can be easily obtained of a narrow width, that would be difficult to obtain simply by one-directional etching.

In a microvalve according to preferred embodiment 1, in a stationary state, as the valve seal part 23 and the glass substrate 27 are in contact, the fluid does not flow in reverse. Moreover, the basic motive principle of the microvalve is the same as that of the first microvalve.

In the composition in which this valve seal part 23 is in contact with the glass substrate 27 in the stationary state of the microvalve, after a process performed in the same way as the process shown in Fig. 3(b) (however, performing isotropic etching), the process may be performed that is shown in Fig. 3(d), that extracts the protective film.

Microvalves in which the width of the valve seal part was different have been created, and when the relationship between the valve seal part and the cavitation development was investigated, when the width of the valve seal part exceeded 50 µm, cavitation development occurred. Further, when the valve seal width exceeded 50 µm, as to the points of discharge stability and discharge life span, satisfactory results were not obtained. Further, in particular, when the width of the valve seal part is equal to or below 30 µm, cavitation development does not occur, and extremely stable discharge can be performed. Moreover, the lower limit value of the width of the valve seal part depends on the characteristic of the photolithography for performing etching, and in the present condition is 0.3 µm; although of course, if there is a finite value equal to or below this, it is no problem at all.

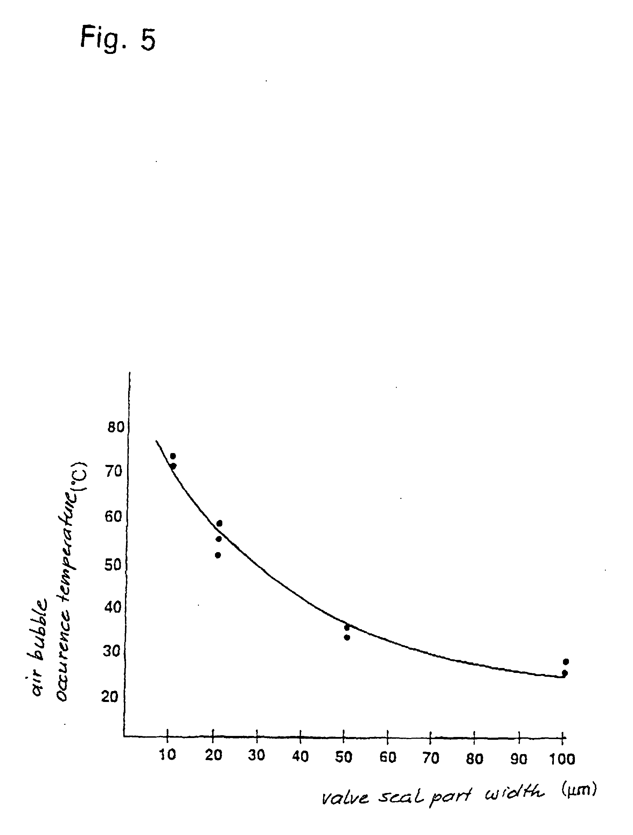

Next, the relation between the valve seal width (µm), and the air bubble occurrence start temperature (°C) in cavitation development was investigated. The results are shown in Fig. 5. Moreover, the discharge conditions in this investigation were defined as 0.1 µl/shot, 10 Hz drive, continuously driven for a 10 days period.

From Fig. 5, to the extent that the width of the valve seal part is narrow, it is understood that restrictions with regard to temperature are relaxed.

In this way, a microvalve according to this preferred embodiment can make fluid resistance smaller; in conjunction with being able to make the fluid speed rapid, it is possible to stabilize the discharge amount. Further, as the loss of pressure is small, it is possible to increase the discharge amount when it is incorporated in a pump. Furthermore, when there is an abrupt loss of pressure, as the loss of pressure is small in the valve seal part, the occurrence of air bubbles can be prevented. Further, the width of the valve seal part is narrow, making it difficult to trap dust and the like in this part.

### (Preferred embodiment 2)

Next, preferred embodiment 2 according to the present invention is explained as shown in the drawings.

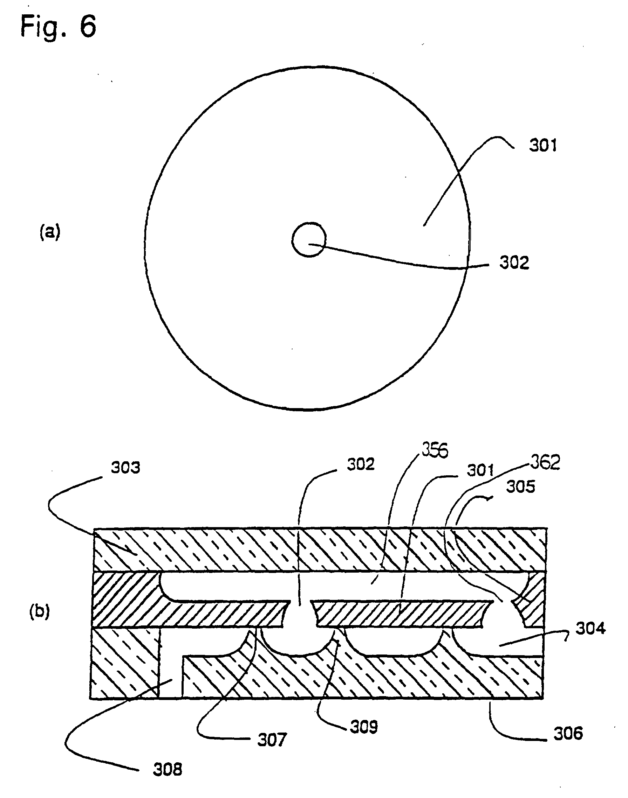

Fig. 6(a) is a view of the bottom plane of the diaphragm part of the microvalve according to the preferred embodiment 2 of the present invention. Fig. 6(b) is a cross-sectional view of a microvalve shown in the stationary state, that is, the state in which pressure is not applied.

The point of difference in structure between a microvalve according to this preferred embodiment 2 and a microvalve according to preferred embodiment 1 is that the valve protrusion and the valve seal part are provided on the glass substrate. Moreover, in this preferred embodiment, detailed explanation is omitted with regard to the material that is identical with that of the microvalve according to the preferred embodiment 1.

The elastic diaphragm 301 of a microvalve according to this preferred embodiment is provided in roughly a disk shape, formed integrally with the support substrate 305 made from a monocrystalline silicon substrate. In its central part, a fluid flow path is formed by circular through hole 302.

At a prescribed position on the lower side glass substrate 306, as shown particularly in Fig. 6(b), a valve protrusion 309 is provided, which, while possessing a rounded form from the lower side to the upper side, gradually narrows. The upper end surface of this valve protrusion 309 defines the valve seal part 307. Moreover, this valve protrusion 309 and valve seal part 307 are formed integrally with the glass substrate 306. A nonconjugative film, which is an oxide film, is formed on the valve seal part 307.

This microvalve is provided with a form in which the valve seal part 307, in a stationary state, contacts an elastic diaphragm 301. The basic principle of movement of this microvalve is the same as that in the first microvalve and in preferred embodiments 1.

Moreover, in a microvalve according to this preferred embodiment 2, the valve seal part 307 and the elastic diaphragm 301 may be composed to define an open gap in a stationary state, as described in the first microvalve.

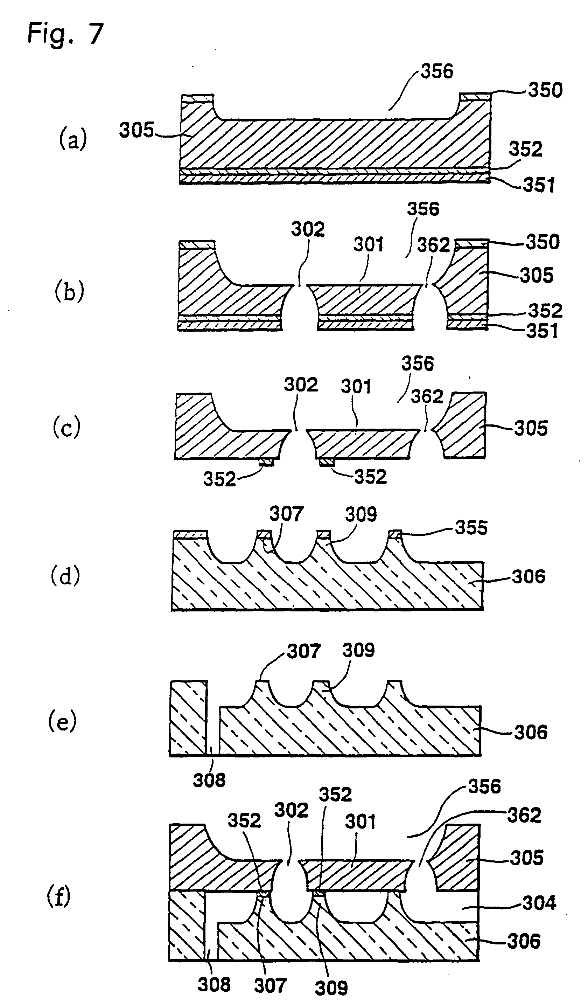

Next, the process order with regard to a fabrication method of a microvalve according to this preferred embodiment is described as shown in Fig. 7(a) through Fig. 7(f).

In the process shown in Fig. 7(a), on the lower surface of the monocrystalline silicon substrate 305, an oxide film 352 is formed with a film thickness of 1 µm. This oxide film 352 is a nonconjugative film between the valve seal part 307 and the valve protrusion 309, formed in a later process, and the silicon substrate 305, preventing joining in a subsequent anodic bonding step. Next, the protective film 351 of the etching is formed on this oxide film 352, further on the upper surface of the monocrystalline silicon substrate 305, and a protective film 350 of the etching is formed respectively other than in the exit side valve chamber 356 region. Then, the protective films 350 and 351 are used as etching masks, to perform isotropic etching on the silicon substrate 305. Moreover, this isotropic etching is performed using a hydrofluoric acid solution..

Next, in the process shown in Fig. 7(b), in the central part of the elastic diaphragm 301, protective film 351 is patterned as a mask for simultaneously etching holes 302 and 362 to form a fluid flow path extending through the hole 302, the exit side valve chamber 356, and the hole 362 to the flow path 304. Then, using this patterned etching protective film 351 as a mask, isotropic etching is performed on the silicon substrate 305, and, in conjunction with holes 302 and 362 being formed to penetrate the substrate, an exit side valve chamber 356 is formed.

Next, in the process shown in Fig. 7(c), etching protective film 351 formed in the region other than the part to be in contact with the later-formed seal part 307 is removed, and etching is performed on the oxide film 352, using the remaining etching protective film 351 as a mask. By doing this, an oxide film 352, which is a nonconjugative film, is left in the part of the silicon substrate 305 opposing the valve seal part 307. Moreover, the film thickness of this oxide film 352 is 1 µm, making it very thin; for the sake of convenience in explanation in Fig. 7, it is shown as thick.

Meanwhile, in the process shown in Fig. 7(d), on the glass substrate 306 that is on the lower side, on the region that is to become the valve protrusion 309, the etching protective film 355 is formed. Next, using this protective film 355 as a mask, isotropic etching is performed on the glass substrate 306. By doing this, indentations of a round shape are formed in the glass substrate 306. The valve protrusion 309 and the valve seal part 307 are formed in accordance with this. Moreover, this isotropic etching is performed using hydrofluoric acid.

Next, in the process shown in Fig. 7(e), after the protective film 355 obtained in the process shown in Fig. 7(d) is removed, an entry 308 for fluid is formed in a prescribed position by an electric discharge process or the like.

Then, in the process shown in Fig. 7(f), silicon substrate 305 obtained in Fig. 7(c) is anodally joined to the glass substrate 306 obtained by the process shown in Fig. 7(e). Further, although it is not particularly shown, the top part glass substrate 303 is anodally joined to the top of the silicon substrate 305. By doing this, the microvalve shown in Fig. 6 is formed. The oxide film 352 is omitted in Fig. 6.

Moreover, either the process processing the silicon substrate shown in Figs. 7(a) through 7(c), or the process processing the glass substrate shown in Figs. 7(d) and 7(e), may be performed first, or they both may be performed in parallel.

Further, in this preferred embodiment, the case is explained in which the width of the valve seal part 307 is equal to or below 50 µm, and this part, in the stationary state, contacts the elastic diaphragm 301 (silicon substrate 305). However, it is not limited to this; a configuration is possible in which a gap is formed between the valve seal part 307 and the elastic diaphragm 301 (silicon substrate 305).

This microvalve configuration does not require etching of the bottom surface of the elastic diaphragm 301 of the silicon substrate 305, so that a smooth surface can be preserved.

### (Preferred embodiment 3)

Next, preferred embodiment 3 according to the present invention is explained as shown in the drawings.

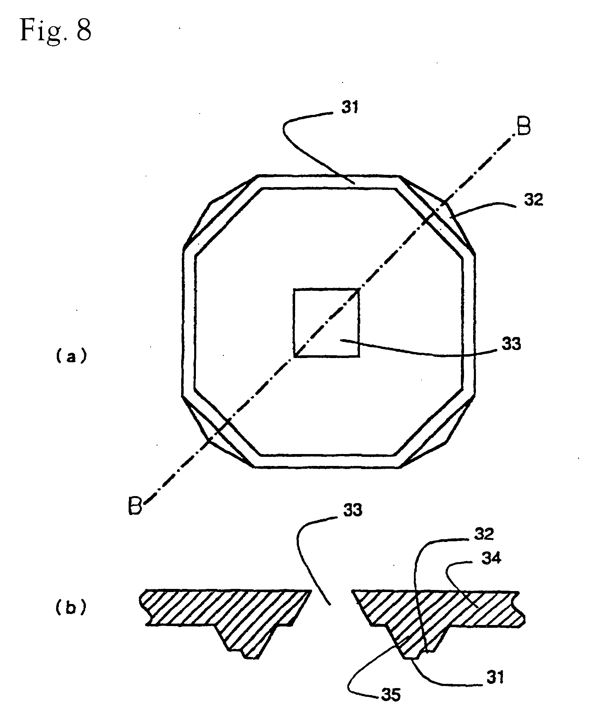

Fig. 8(a) is a view of the bottom plane of the diaphragm part of the microvalve according to preferred embodiment 3 of the present invention; Fig. 8(b) is a cross sectional view B-B of Fig. 8(a).

The microvalve shown in Fig. 8(a) and Fig. 8(b) is formed by anisotropic etching; as a result, a step (level difference) is formed between the valve seal part, which is the distal end of the valve protrusion of the first microvalve, and the base end; also, in a stationary state, this valve seal part is equipped with a structure configured such that it contacts a glass substrate. Moreover, in this preferred embodiment, explanation is omitted with regard to the parts constructed in the same way as in the microvalve shown in Fig. 1.

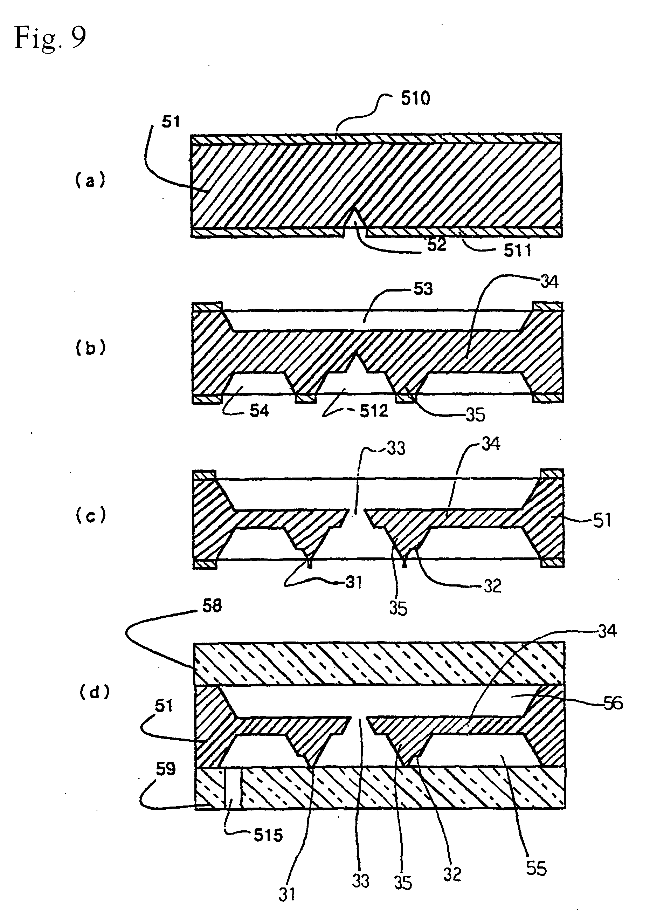

The elastic diaphragm 34 is equipped with an octagonal board shape formed integrally with a support board 51 (shown in Fig. 9) that is composed of a monocrystalline silicon substrate. A hole 33 is formed as a flow path for fluid (liquid) at the central part of the elastic diaphragm. A step 32 is formed at the distal end side (the lower side) of the valve protrusion 35 formed integrally with the elastic diaphragm 34; in accordance with this, even when anisotropic etching is performed, the width of the valve seal part 31 can easily be narrowed (for example, can be made equal to or below 50 µm). By creating this kind of structure, a microvalve is obtained having a valve protrusion 35 of high strength, and a microvalve is obtained having low resistance. Symbol 55 is the entry side valve chamber, and symbol 56 is the exit side valve chamber.

Next, this microvalve fabrication method is described in the order of the fabrication process shown in Fig. 9(a) through Fig. 9(d).

In the process shown in Fig. 9(a), in a method conducted in the same way as in the process shown in Fig. 3(a), the etching of the protective film 510 on the upper side surface of the silicon substrate 51 is formed as etching of the protective film 511 formed on the lower side surface. Next, using the protective films 510 and 511 as masks, etching is performed on the silicon substrate 51, and a hole 52 is formed.

In the process shown in the Fig. 9(b), in a method conducted in the same way as the process shown in Fig. 3(b), the top part etching part 53, and the bottom part etching parts 54 and 512 are formed.

Then, in the process shown in Fig. 9(c), with some of the width left as a remaining part in a region corresponding to the central side part of the elastic diaphragm 34 protective film 511 formed on the valve seal part 31 region is removed. Next, with the remaining protective films 510 and 511 used as masks, etching is performed, and the step 32 is formed. In this way, two steps are etched; as a result, the width of the valve seal part 31 can be more than 2 µm. Then, from the etching depth of the step 32, side etching is performed on the valve seal part 31; however, it is necessary, in order to obtain a cavitation preventive effect, to limit the scattering of the width of the valve seal part 31 to 10 µm. In a common 30% KOH solution, because the ratio of the side etching amount to the etching depth is about 1:1, a step of about 10 µm is permitted.

Next, in the process shown in Fig. 9(d), after an oxide film, which is a nonconjugative film, is formed on the surface of the valve seal part 31, the process is performed in the same way as the process shown in Fig. 3(d), and the glass substrate 59, in which an opening is made by the entry 515, is anodally joined to the bottom side of the silicon substrate 51, and the glass substrate 58 is joined to the top side.

Moreover, in this preferred embodiment, although the case is explained in which the support substrate 51, the elastic diaphragm 34, the valve protrusion 35, and the valve seal part 31, are integrally configured from a silicon substrate, the embodiment is not limited to this; of course, as shown in the preferred embodiment 2, the valve protrusion and the valve seal part may also be provided on the glass substrate 59.

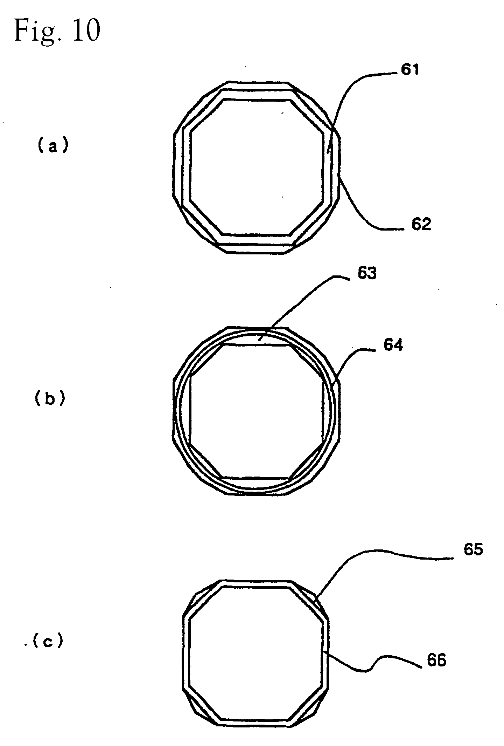

Further, the step 32 formed at the valve protrusion 35 is not limited to the above-described shape; for example, as is shown in Figs. 10(a) through 10(c), and the like, the width of the valve seal part can be narrowed, and when in a form such that its function as a microvalve is not hindered, other forms may be used. Fig. 10(a) through Fig. 10(c) are views of the base of the diaphragm part of the microvalve. Moreover, in these figures, the hole, forming the fluid flow path, is not shown.

The valve protrusion shown in Fig. 10(a) has a pattern that is suitable, even in a case when the etching depth is changed, such that the width of step 62, obtained by the etching of two steps, is wider as compared to the width of the valve seal part 61.

The valve protrusion shown in Fig. 10(b) is provided with a valve seal part 64, provided with a circular shape concentric with step 63, at the central part on the step 63, obtained by two-step etching. In this case, although the valve seal part 64 is arranged in a concentrically circular shape at the central part of the step 63, so that good sealing contact with the glass substrate is obtained, it is necessary to make the step 63 wider.

In the protrusion shown in Fig. 10(c), the step 65 is small relative to the valve seal part 66, and the valve protrusion size is small.

Moreover, the microvalve shown in preferred embodiments 1 through 4, can be formed by dry etching, besides wet etching. In the event that they are formed by dry etching, for example, the width of the valve protrusion part extends uniformly in a vertical direction. Because of this, the width of the valve seal part can easily be made narrow, and can be created in a concentric circular shape.

### (Preferred embodiment 4)

Next, preferred embodiment 4 of the present invention is explained with reference to the drawings. In this preferred embodiment, a micropump is described that incorporates the type of microvalve described in the preferred embodiment 3, that is, a microvalve in which a step is formed between the valve seal part and the valve protrusion base end, as an input valve. Moreover, this micropump discharges a very small amount of liquid having a comparatively high flowability of water, balanced saline solution, chemicals, and the like, and is thus particularly preferable.

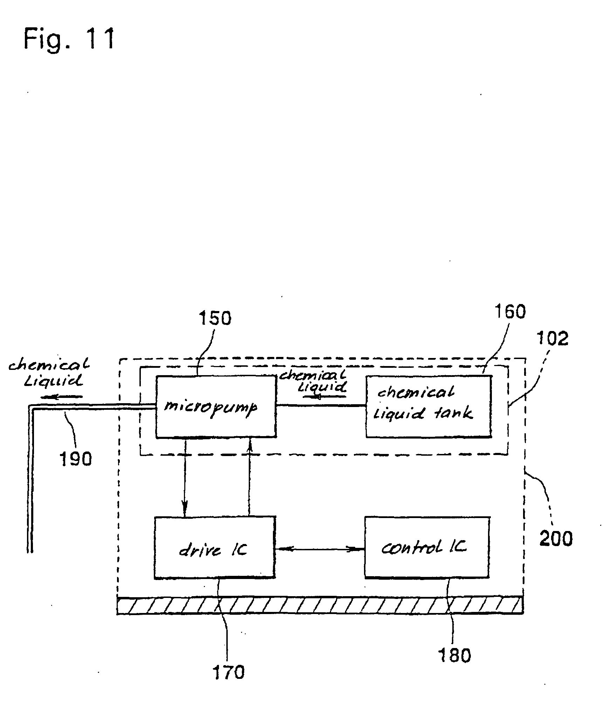

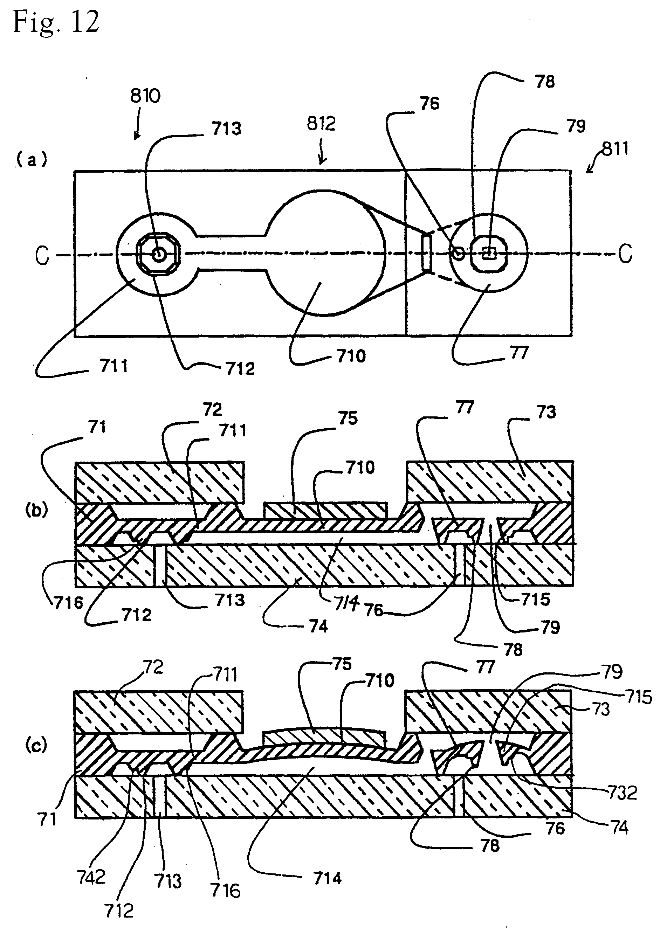

Fig. 11 is a drawing of the entire configuration of a micropump according to preferred embodiment 4. Fig. 12(a) is a view of the bottom plane of a micropump shown in Fig. 11; Fig. 12(b) is a view of the cross section C-C of Fig. 11(a) in the stationary state; Fig. 12(c) is a figure of the cross section C-C of Fig. 11(a) in the suction state. Moreover, in this preferred embodiment, a micropump unit is described that is used to supply a chemical (liquid drug) for medical use.

The micropump unit shown in Fig. 12 is configured such that it is equipped with a micropump 150, a chemical tank 160 that supplies chemical to the micropump 150, a drive IC 170 for driving the micropump 150, a control IC 180 for controlling the drive IC 170; a discharge device 102 is constituted by the micropump 150 and the chemical tank 160. These parts are accommodated within a case 200; a tube 190 is connected to the micropump 150, for inducing the discharged chemical liquid to a prescribed location. A micropump unit configured from these parts possesses a rectangular parallelepiped shape of 20mm x 8mm x 2mm.

The micropump 150, as shown in Fig. 12(a) through Fig. 12(c), is configured such that it is provided with an output part 810, an input part 811, and a drive part 812.

An output valve provided in the output part 810 is configured as equipped with an elastic diaphragm 711, provided in a support substrate 71 that is composed of a silicon substrate, a valve protrusion 716 provided on the elastic diaphragm 711, and a valve seal part 712 on the end of the valve protrusion 716, that opens/closes the valve corresponding to the vertical motion of the elastic diaphragm 711. Further, to the valve protrusion 716, a step 742 is formed between this base end (elastic diaphragm 711 side) and the valve seal part 712.

The input valve provided in the input part 811 is configured such that it is provided with an elastic diaphragm 77, a valve protrusion 715 provided in the elastic diaphragm 77, and a valve seal part 78 provided on the end of the valve protrusion 715, that opens/closes the valve corresponding to the vertical motion of the elastic diaphragm 77. A hole 79, which is a chemical liquid flow path, is formed in the central part of the elastic diaphragm 77. To the valve protrusion 715, a step 732 is formed between the base end and the valve seal part 78.

The drive part 812 drives the input valve and the output valve; it is configured from a drive diaphragm 710, and a piezoelectric element 75 adhered to it via an electrode, that is provided on the drive diaphragm 710. This drive diaphragm 710 is configured flexibly in the vertical direction by applying an electrical field to piezoelectric element 75.

Moreover, in this preferred embodiment, the input valve, the drive diaphragm, and the output valve, are formed integrally on the support substrate 71.

The symbol 74 is a glass substrate having formed therein the discharge port 713 on the output part 810 side, and the input port (entry) 76 on the input part 811 side. The tube 190 is connected to this discharge port 713, and the chemical (liquid) tank 160 is connected to the input port 76. Further, the symbol 714 denotes the chamber.

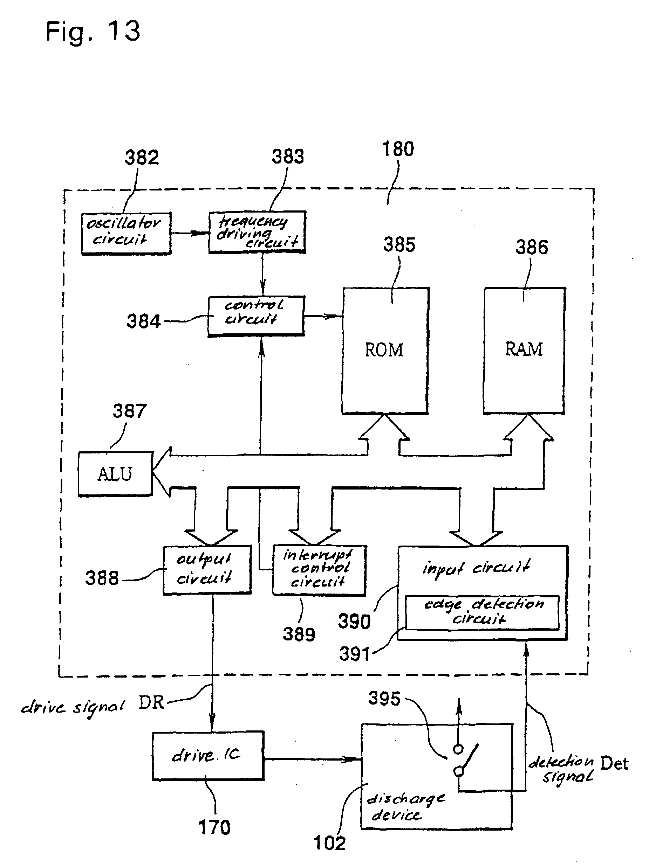

Fig. 13 is a block diagram of the specific micropump unit according to this preferred embodiment. The control IC 180 of this micropump unit is configured from a general microcomputer; the oscillator circuit 382, a frequency dividing (counting-down) circuit 383, a control circuit 384, a ROM 385, a RAM 386, an ALU 387, an output circuit 388, an interrupt control circuit 389, and an input circuit 390.

A control IC 170 is connected to the output circuit 388; this drive IC 170 is configured such that an electric field is applied to the piezoelectric element 75 of a micropump corresponding to the drive signal DR output from the output circuit 388.

The discharge valve behavior detection circuit within the discharge device 102 is represented by an equivalent switch 395. The drive IC 170 increases the amplitude of the drive pulse output from the control IC 180, and drives the discharge device 102. The output of the oscillator circuit 382 is frequency divided to system clock of the control IC 180 within the frequency dividing circuit 383. The control circuit 384 controls the operation of the control IC 180. The ROM 385, RAM 386, ALU 387, output circuit 388, interrupt control circuit 389 and input circuit 390, are connected via a bus; an edge detection circuit 391 is included in the input circuit 310.

The discharge valve behavior detection circuit, detects the behavior of the discharge valve by measuring the lead-through time determined by the presence of contact between the valve seal part 712 that rises by vertical motion of the piezoelectric element 75, and the glass substrate 74, and monitors the occurrence of air bubbles.

Next, the specific operation of the configuration provided in the micropump unit is explained.

The supply of chemical liquid from the chemical liquid tank 160 is performed as summarized below. That is, corresponding to the drive signal DR output from the output circuit 388 of the control IC 180, the drive IC 170 applies an electric field to the micropump piezoelectric element 75. As a result, the elastic diaphragm 710 is raised upward as shown in Fig. 12(c). The result is that negative pressure exists within the chamber 714, and rising force moves the elastic diaphragm 77 upward. Simultaneously with this, the valve seal part 78 is raised upward, and chemical liquid is sucked from the chemical liquid tank 160 via the input port 76.

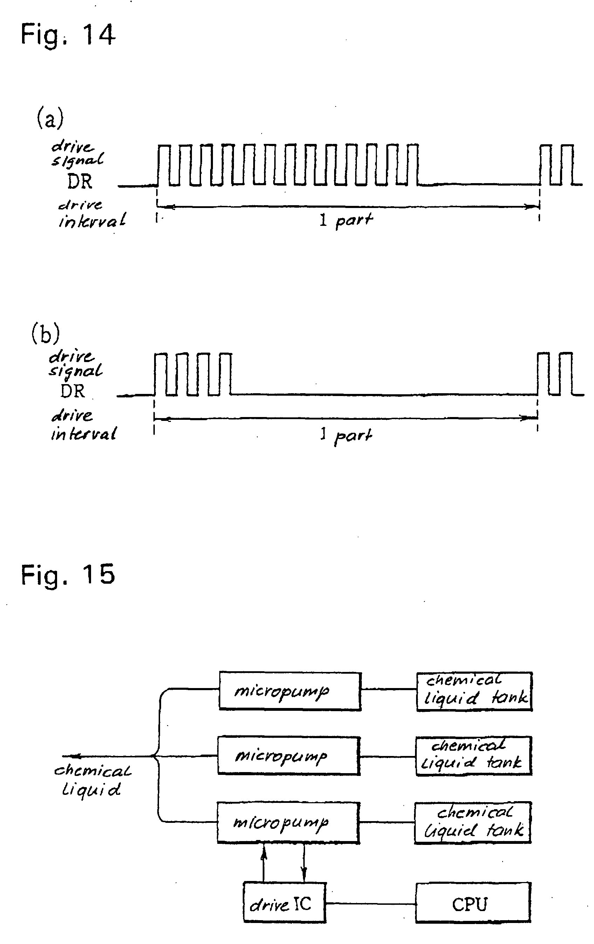

The drive signal DR comprises a prescribed number of pulses within a constant time, as shown in Fig. 14(a). Corresponding to a preset drive amount, a drive pulse number is set within the drive interval. Moreover, Fig. 14(b) shows one example of a case in which the set drive amount is smaller than Fig. 14(a).

The sucked-in chemical liquid is supplied to the tube 190 as summarized below. That is, corresponding to the drive signal DR, when the drive IC 170 stops the application of an electric field to the piezoelectric element 75 of the micropump, the elastic diaphragm 710 is pushed downward; as a result, pressure builds up within the chamber 714, and rising force moves the elastic diaphragm 711 upward. Simultaneously, the valve seal part 712 is raised upward, and chemical liquid is discharged from the discharge port 713.

During these operations, in the discharge valve behavior detection circuit connected to the discharge device 102, the detection signal Det obtained from this is output to the edge detection circuit 391, and, this wave shape and the drive signal DR are compared, and a prescribed adjustment is made corresponding to the data obtained. Moreover, an air bubble detector, such as the discharge valve behavior detection circuit, or the edge detection circuit 391, does not definitely need to be provided.

Moreover, in a conventional micropump, at the instant that the elastic diaphragm of the input part is raised upward, negative pressure occurs abruptly in the vicinity of the valve seal part of this input part; although air bubbles occurred at room temperature, in a micropump according to the present invention, because the width of the valve seal part of the input part is set to be equal to or below 50 µm, the occurrence of air bubbles is rarely seen,

From this, the relation between the valve seal part of the input part and the occurrence of air bubbles differs by various factors, such as the piezoelectric element drive speed, the piezoelectric element size, the valve size, the displacement amount for the drive diaphragm, the temperature, and the like. However, if the width of the valve seal part is equal to or below 50 µm, under the condition of a discharge amount of 0.1 µl, it becomes evident by experiment that even below the high temperature of 70°C, the occurrence of air bubbles is sufficiently suppressed. Further, if the width of the valve seal part is equal to or below 30 µm, under the aforesaid conditions, there is absolutely no occurrence of air bubbles.

Moreover, in this embodiment, the case in which a microvalve of a type shown in Fig. 8 and Fig. 9 is used is explained; however, the embodiment is not limited to this; when there is a microvalve according to the present invention, including the aforesaid preferred embodiment(s), a desirable result will of course be obtained, whichever microvalve is used.

Further, a micropump according to the present invention, other than being used in a micropump unit for medical use, for example, as shown in Fig. 15, is provided with a plurality of discharge devices, composed of micropumps and solution tanks, and, by having the capability to combine small amounts of various liquids, it can be used even for analysis.

Further, several discharge devices composed of micropumps and solution tanks are provided; small amounts of solution from a voluntarily selected discharge device are discharged to a prescribed target position, and can be used even as a printer head. In this way, a micropump according to the present invention can be applied to various fields.

Moreover, in the aforesaid preferred embodiments 1 through 4, examples are described in which a monocrystalline silicon substrate, as a processed substrate, is used; however, the embodiments are not limited to this. It is possible, by changing etching conditions or the like, to use, for example, in place of a monocrystalline silicon substrate, a glass substrate, quartz crystal, or a metal such as stainless steel.

### Potential Fields of Use

As was described above, a microvalve according to one embodiment of the present invention is provided with a prescribed gap between the valve seal part and the elastic diaphragm or the holding substrate in the stationary state. As a result, it is possible for flow resistance to be small, and, in conjunction with the flow speed being made rapid, it is possible for the expulsion amount of the flow to be stabilized. Further, as the loss of pressure is small, it is possible for the expulsion amount, when incorporated in a pump, to be increased. Furthermore, during an abrupt loss of pressure, the loss of pressure in the valve seal part is made small, so that it is possible for the occurrence of air bubbles to be prevented. Further, by the existence of the aforesaid gap, there is also no occurrence of problems such as the valve not closing when dust and the like is trapped in the valve seal part. This configuration can be formed by an process such as by etching, so that the fabrication process is simple. Further, special surface processing is not necessary, so that there is also no occurrence of defects in the flow path.

Further, in other microvalve configurations according to the present invention, the width of the valve seal part can be equal to or below 50 µm, so that it is possible to have a small flow resistance, and, in conjunction with being able to make the flow speed rapid, it is possible for the expulsion amount of the flow to be stabilized. Further, the loss of pressure is small, with the result that it is possible for the expulsion amount, when incorporated in a pump, to be increased. Furthermore, during an abrupt loss of pressure, as the loss of pressure in the valve seal part is small, it is possible to prevent the occurrence of air bubbles. Further, as the width of the valve seal part is narrow, it is difficult for dust and the like to be trapped in this part. This configuration allows for a simple configuration process, as it is formed by an process, namely, etching. Further, as no special surface processing is necessary, there is also no occurrence of defects in the flow path.

Further, a step is provided at the valve protrusion, adding to the efficacy, and it is possible to obtain an optional small uniform valve width, not related to the etching depth.

Furthermore, a microvalve of a configuration in which a valve protrusion at the holding substrate side and a valve seal part are provided, can preserve a smooth surface, as it is not necessary to etch one side of the elastic diaphragm surface.

Further, a micropump in which a microvalve according to the present invention is incorporated, can have a highly accurate absorption/discharge of a constant amount and a finite amount of fluid, without the occurrence of air bubbles.

## Claims

1. A microvalve comprising
an elastic diaphragm (21) that moves vertically by change in pressure,
a support substrate (25) that supports said elastic diaphragm (21),
a holding substrate (27) that holds said support substrate (25), and
a valve protrusion (29) provided on one of said elastic diaphragm (21) and holding substrate (27) and having a valve seal part (23) that performs fluid control and contacts the other one of said elastic diaphragm (21) and holding substrate (27), when in a stationary state,
**characterized in that** the width of the contact part between said valve seal part and said other one of said holding substrate and elastic diaphragm is equal to or less than 50 µm.

2. The microvalve of Claim 1 wherein said valve protrusion (35) is equipped with said valve seal part (31) at its distal end, and a step (32) is formed between said distal end and the base end.

3. The microvalve of Claim 2 wherein said step (32) is equal to or less than 10 µm.

4. The microvalve of any one of Claim 1 through Claim 3, wherein said support substrate (11; 25), said elastic diaphragm (13; 21), said valve protrusion (112; 29) and said valve seal part (14; 23) are integrally formed from a silicon substrate, and said holding substrate (111; 27) is formed from a glass substrate.

5. A microvalve of any one of Claim 1 through Claim 3, wherein said support substrate and said elastic diaphragm are integrally formed from a silicon substrate, and said holding substrate, said valve protrusion and said valve seal part are integrally formed from a glass substrate.

6. A method of fabricating a microvalve in which an elastic diaphragm (21) moves vertically by change in pressure, a support substrate (25) supports said elastic diaphragm, a holding substrate (27) holds said support substrate, and a valve protrusion (29) is provided on said elastic diaphragm and has a valve seal part (23) that performs fluid control, wherein said diaphragm (21) is integrally formed with said support substrate (25),
the method comprising:
(a) preparing a first substrate to become said support substrate (25) and diaphragm (21), said first substrate having a first and an opposite second surface,
(b) preparing a second substrate to become said holding substrate (27), said second substrate having a third and an opposite fourth surface,
(c) forming a first protective film on said first surface except for a region to become the central part of said elastic diaphragm,
(d) performing a first etching on said first surface, using said first protective film as a mask,
(e) forming a second protective film on said second surface,
(f) removing parts of said first protective film other than those on regions of said first surface corresponding to said support substrate and said valve seal part to be formed,
(g) performing, after step (f), a second etching on said first surface, using the part of the first protective film remaining after step (f) as a mask, and a first etching on said second surface, using said second protective film as a mask, thereby forming said elastic diaphragm (21), valve protrusion (29), valve seal part (23), and supporting substrate,
(h) removing, after step (g), the remaining part of said first protective film and said second protective film,
(i) forming a non-conjugative film either on part of said third surface of said second substrate (27) or on said valve seal part, and
(j) anodically bonding, after steps (h) and (i), said third surface of said second substrate in which an entry port (16) has been formed, to said first surface of said first substrate, wherein when step (i) forms said non-conjugative film on part of said third surface, said first and second substrates being joined such that said non-conjugative film opposes said valve seal part, and
wherein in step (e) the remaining portion of said first protective film on the region of said first surface corresponding to said valve seal part to be formed has a width of no more than 50 µm.

7. The method of Claim 6, wherein said first substrate is a monocrystalline silicon substrate.

8. A method of fabricating a microvalve in which an elastic diaphragm (301) moves vertically by change in pressure, a support substrate (305) supports said elastic diaphragm, a holding substrate (306) holds said support substrate, and a valve protrusion (309) is provided on said holding substrate and is equipped with a valve seal part (307) that performs fluid control, wherein said diaphragm (301) is integrally formed with said support substrate (305),
the method comprising:
(a) preparing a first substrate (305) which is to become said support substrate and said diaphragm (301), said first substrate having a first and an opposite second surface,
(b) preparing a second substrate (306) which is to become said holding substrate, said second substrate having a third and an opposite fourth surface,
(c) forming a first protective film (350) on said first surface in a region corresponding to the support substrate to be formed,
(d) performing a first etching on said first surface, using the first protective film (350) as a mask,
(e) forming a second protective film (351) on said second surface, except for a region corresponding to the central part of said elastic diaphragm (301) to be formed,
(f) performing, after steps (c) to (e), a second etching, using said first protective film (350) and said second protective film (351) as masks, on said first and second surfaces until said region corresponding to the central part of said elastic diaphragm (301) has been opened,
(g) forming a third protective film (355) on said third surface of said second substrate (306) in a region corresponding to said valve protrusion (309) to be formed,
(h) performing a third etching on said second substrate (306) using the third protective film (355) as a mask thereby forming said valve protrusion (309) and valve seal part (307),
(i) forming a nonconjugative film either on said valve seal part or on part of said second surface,
(j) forming an entry port (308) to penetrate said second substrate (306) from said third to said fourth surface, and
(k) anodically bonding, after steps (f) and (i), said second surface of the second substrate (306) to said third surface of the first substrate (305), wherein when step (i) forms said non-conjugative film on part of said second surface, said first and second substrates being joined such that said non-conjugative film opposes said valve seal part.

9. The method of Claim 8, wherein step (e) comprises forming a nonconjugative film (352) on said second surface and subsequently forming said second protective film (351) on said nonconjugative film (352), and step (i) comprises selectively removing the nonconjugative film (352) by etching except for on said part of the second surface.

10. The method of Claim 8 or Claim 9, wherein said first substrate (305) is a monocrystalline silicon substrate, and said second substrate (306) is a glass substrate.

11. A micropump having an input part (811) equipped with an input valve, a drive part (812) equipped with a drive diaphragm (710), and an output part (810) equipped with an output valve, said input valve being composed of any one of the microvalves of Claim 1 through Claim 6.

12. The micropump of Claim 11, wherein said input valve, said drive diaphragm and said output valve are integrally formed from a monocrystalline silicon substrate (71).

13. A method of fabricating a micropump having an input part (811) equipped with an input valve, a drive part (812) equipped with a drive diaphragm, and an output part (810) equipped with an output valve, the method fabricating said input valve by any one of the methods of Claim 6 through Claim 10.

14. A device equipped with a tank (160) that accommodates fluid, the micropump of Claim 11 or 12 connected to said tank and sucking/discharging said fluid, drive means (170) that drives said micropump, and control means (180) that controls said drive means.

## Patentansprüche

1. Mikroventil, umfassend,
eine elastische Membran (21), die sich bei Druckänderung vertikal bewegt,
ein Trägersubstrat (25), das die elastische Membran (21) trägt,
ein Haltesubstrat (27), das das Trägersubstrat (25) hält, und
einen Ventilvorsprung (29), der an einem der beiden Teile, elastische Membran (21) und Haltesubstrat (27), vorgesehen ist und einen Ventilverschlußteil (23) aufweist, der die Fluidsteuerung ausführt und in einem stationären Zustand das andere der beiden Teile, elastische Membran (21) und Haltesubstrat (27), berührt,
**dadurch gekennzeichnet, daß** die Breite des Kontaktteils zwischen dem Ventilverschlußteil und dem anderen der beiden Teile, Haltesubstrat und elastische Membran, kleiner oder gleich 50 µm ist.

2. Mikroventil nach Anspruch 1, bei dem der Ventilvorsprung (35) an seinem distalen Ende mit dem Ventilverschlußteil (31) ausgestattet ist und eine Stufe (32) zwischen dem distalen Ende und dem Basisende gebildet ist.

3. Mikroventil nach Anspruch 2, bei dem die Stufe (32) kleiner oder gleich 10 µm ist.

4. Mikroventil nach einem der Ansprüche 1 bis 3, bei dem das Trägersubstrat (11; 25), die elastische Membran (13; 21), der Ventilvorsprung (112; 29) und der Ventilverschlußteil (14; 23) einstückig aus einem Siliciumsubstrat gebildet sind und das Haltesubstrat (111; 27) aus einem Glassubstrat gebildet ist.

5. Mikroventil nach einem der Ansprüche 1 bis 3, bei dem das Trägersubstrat und die elastische Membran einstückig aus einem Siliciumsubstrat gebildet sind und das Haltesubstrat, der Ventilvorsprung und der Ventilverschlußteil einstückig aus einem Glassubstrat gebildet sind.

6. Verfahren zur Herstellung eines Mikroventils, bei dem sich eine elastische Membran (21) bei Druckänderung vertikal bewegt, ein Trägersubstrat (25) die elastische Membran trägt, ein Haltesubstrat (27) das Trägersubstrat hält und ein Ventilvorsprung (29) an der elastischen Membran vorgesehen ist und einen Ventilverschlußteil (23) aufweist, der die Fluidsteuerung ausführt, wobei die Membran (21) einstückig mit dem Trägersubstrat (25) gebildet ist,
wobei das Verfahren umfaßt:
(a) Herstellen eines ersten Substrats, das zu dem Trägersubstrat (25) und der Membran (21) werden soll, wobei das erste Substrat eine erste und ein davon abgewandte zweite Hauptfläche aufweist,
(b) Herstellen eines zweiten Substrats, das zu dem Haltesubstrat (27) werden soll,
wobei das zweite Substrat eine dritte und eine davon abgewandte vierte Hauptfläche aufweist,
(c) Bilden eines ersten Schutzfilms auf der ersten Hauptfläche mit Ausnahme eines Bereichs, der zum mittleren Teil der elastischen Membran werden soll,
(d) Ausführen eines ersten Ätzens an der ersten Hauptfläche unter Verwendung des ersten Schutzfilms als Maske,
(e) Bilden eines zweiten Schutzfilms auf der zweiten Hauptfläche,
(f) Entfernen von Teilen des ersten Schutzfilms mit Ausnahme jener auf Bereichen der ersten Hauptfläche, die dem Trägersubstrat und dem Ventilverschlußteil entsprechen, die zu bilden sind,
(g) Ausführen, nach Schritt (f), eines zweiten Ätzens an der ersten Hauptfläche unter Verwendung des nach Schritt (f) verbleibenden Teils des ersten Schutzfilms als Maske und eines ersten Ätzens an der zweiten Hauptfläche unter Verwendung des zweiten Schutzfilms als Maske, wodurch die elastische Membran (21), der Ventilvorsprung (29), der Ventilverschlußteil (23) und das Trägersubstrat gebildet werden,
(h) Entfernen, nach Schritt (g), des verbleibenden Teils des ersten Schutzfilms und des zweiten Schutzfilms,
(i) Bilden eines nicht-verbindenden Films entweder auf einem Teil der dritten Hauptfläche des zweiten Substrats (27) oder auf dem Ventilverschlußteil, und
(j) anodisches Verbinden, nach den Schritten (h) und (i), der dritten Hauptfläche des zweiten Substrats, in dem eine Einlaßöffnung (16) gebildet worden ist, mit der ersten Hauptfläche des ersten Substrats, wobei, wenn Schritt (e) den nicht-verbindenden Film auf einem Teil der dritten Hauptfläche bildet, das erste und das zweite Substrat so miteinander verbunden werden, daß der nicht-verbindende Film dem Ventilverschlußteil gegenüberliegt, und
wobei in Schritt (e) der verbleibende Abschnitt des ersten Schutzfilms auf dem Bereich der ersten Hauptfläche entsprechend dem zu bildenden Ventilverschlußteil eine Breite von nicht mehr als 50 µm aufweist.

7. Verfahren nach Anspruch 6, bei dem das erste Substrat ein monokristallines Siliciumsubstrat ist.

8. Verfahren zur Herstellung eines Mikroventils, bei dem sich eine elastische Membran (301) bei Druckänderung vertikal bewegt, ein Trägersubstrat (305) die elastische Membran trägt, ein Haltesubstrat (306) das Trägersubstrat hält und ein Ventilvorsprung (309) auf dem Haltesubstrat vorgesehen ist und mit einem Ventilverschlußteil (307) ausgestattet ist, der die Fluidsteuerung ausführt, wobei die Membran (301) einstückig mit dem Trägersubstrat (305) gebildet ist,
wobei das Verfahren umfaßt:
(a) Herstellen eines ersten Substrats (305), das zu dem Trägersubstrat und der Membran (301) werden soll, wobei das erste Substrat eine erste und eine davon abgewandte zweite Hauptfläche aufweist,
(b) Herstellen eines zweiten Substrats (306), das zu dem Haltesubstrat werden soll,
wobei das zweite Substrat eine dritte und eine davon abgewandte vierte Hauptfläche aufweist,
(c) Bilden eines ersten Schutzfilms (350) auf der ersten Hauptfläche in einem Bereich entsprechend dem zu bildenden Trägersubstrat,
(d) Ausführen eines ersten Ätzens an der ersten Hauptfläche unter Verwendung des ersten Schutzfilms (350) als Maske,
(e) Bilden eines zweiten Schutzfilms (351) auf der zweiten Hauptfläche mit Ausnahme eines Bereichs, der dem mittleren Teil der zu bildenden elastischen Membran (301) entspricht,
(f) Ausführen, nach den Schritten (c) bis (e), eines zweiten Ätzens unter Verwendung des ersten Schutzfilms (350) und des zweiten Schutzfilms (351) als Masken auf der ersten und der zweiten Hauptfläche, bis der Bereich entsprechend dem mittleren Teil der elastischen Membran (301) geöffnet worden ist,
(g) Bilden eines dritten Schutzfilms (355) auf der dritten Hauptfläche des zweiten Substrats (306) in einem Bereich entsprechend dem zu bildenden Ventilvorsprung (309),
(h) Ausführen eines dritten Ätzens an dem zweiten Substrat (306) unter Verwendung des dritten Schutzfilms (355) als Maske, wodurch der Ventilvorsprung (309) und der Ventilverschlußteil (307) gebildet werden,
(i) Bilden eines nicht-verbindenden Films entweder auf dem Ventilverschlußteil oder einem Teil der zweiten Hauptfläche,
(j) Bilden einer Einlaßöffnung (308), um das zweite Substrat (306) von der dritten zur vierten Hauptfläche hin zu durchdringen, und
(k) anodisches Verbinden, nach den Schritten (f) und (j), der zweiten Hauptfläche des zweiten Substrats (306) mit der dritten Hauptfläche des ersten Substrats (305), wobei, wenn Schritt (i) den nicht-verbindenden Film auf einem Teil der zweiten Hauptfläche bildet, das erste und das zweite Substrat so miteinander verbunden werden, daß der nicht-verbindende Film dem Ventilverschlußteil gegenüberliegt.

9. Verfahren nach Anspruch 8, bei dem Schritt (e) das Bilden eines nicht-verbindenden Films (352) auf der zweiten Hauptfläche und das anschließende Bilden des zweiten Schutzfilms (351) auf dem nicht-verbindenden Film (352) umfaßt und Schritt (i) das selektive Entfernen des nicht-verbindenden Films (352) mit Ausnahme des genannten Teils der zweiten Hauptfläche durch Ätzen umfaßt.

10. Verfahren nach Anspruch 8 oder 9, bei dem das erste Substrat (305) ein monokristallines Siliciumsubstrat und das zweite Substrat (306) ein Glassubstrat ist.

11. Mikropumpe mit einem mit einem Eingangsventil ausgestatteten Eingangsteil (811), einem mit einer Treibermembran (710) ausgestatteten Treiberteil (812) und einem mit einem Ausgangsventil ausgestatteten Ausgangsteil (810), wobei das Eingangsventil aus einem der Mikroventile gemäß Anspruch 1 bis 6 gebildet ist.

12. Mikropumpe nach Anspruch 11, bei der das Eingangsventil, die Treibermembran und das Ausgangsventil einstückig aus einem monokristallinen Siliciumsubstrat (71) gebildet sind.

13. Verfahren zur Herstellung einer Mikropumpe mit einem mit einem Eingangsventil ausgestatteten Eingangsteil (811), einem mit einer Treibermembran ausgestatteten Treiberteil (812) und einem mit einem Ausgangsventil ausgestatteten Ausgangsteil (810), wobei das Verfahren das Eingangsventil durch eines der Verfahren gemäß Anspruch 6 bis 10 herstellt.

14. Vorrichtung, die mit einem Fluid enthaltenden Tank (160), der Mikropumpe gemäß Anspruch 11 oder 12, die an den Tank angeschlossen ist und das Fluid ansaugt/abgibt, einer Treiberanordnung (170), welche die Mikropumpe treibt, und einer Steueranordnung (180), welche die Treiberanordnung steuert, ausgestattet ist.

## Revendications

1. Microsoupape comprenant :
une membrane élastique (21) qui se déplace verticalement en cas de variation de pression,
un substrat de support (25) qui supporte la membrane élastique (21),
un substrat de fixation (27) qui maintient le substrat de support (25), et
une saillie de soupape (29) disposée sur l'un desdits membrane élastique (21) et substrat de fixation (27) et ayant une partie de joint de soupape (23) qui exécute une commande du fluide et est en contact avec l'autre desdits membrane élastique (21) et substrat de fixation (27) dans un état stationnaire,
**caractérisé en ce que** la largeur de la partie de contact entre la partie de joint de soupape et l'autre desdits substrat de fixation et membrane élastique est inférieure ou égale à 50 µm.

2. Microsoupape selon la revendication 1, dans laquelle la saillie de soupape (35) est pourvue d'une partie de joint de soupape (31) à son extrémité distale et un palier (32) est formé entre l'extrémité distale et l'extrémité de base.

3. Microsoupape selon la revendication 2, dans laquelle le palier (32) est inférieur ou égal à 10 µm.

4. Microsoupape selon l'une quelconque des revendications 1 à 3, dans laquelle le substrat de support (11 ; 25), la membrane élastique (13 ; 21), la saillie de soupape (112 ; 29) et la partie de joint de soupape (14 ; 23) sont formés intégralement à partir d'un substrat en silicium, et le substrat de fixation (111 ; 27) est formé à partir d'un substrat en verre.

5. Microsoupape selon l'une quelconque des revendications 1 à 3, dans laquelle le substrat de support et la membrane élastique sont formés intégralement à partir d'un substrat en silicium et le substrat de fixation, la saillie de soupape et la partie de joint de soupape sont formés intégralement à partir d'un substrat en verre.

6. Procédé de fabrication d'une microsoupape dans laquelle une membrane élastique (21) se déplace verticalement en cas de variation de pression, un substrat de support (25) supporte la membrane élastique (21), un substrat de fixation (27) maintient le substrat de support et une saillie de soupape (29) est disposée sur la membrane élastique et a une partie de joint de soupape (23) qui exécute une commande du fluide, dans laquelle la membrane (21) est formée intégralement avec le substrat de support (25),
le procédé comprenant les étapes qui consistent en:
(a) la préparation d'un premier substrat qui deviendra le substrat de support (25) et la membrane (21), le premier substrat ayant une première surface et une deuxième surface opposée,
(b) la préparation d'un deuxième substrat qui deviendra le substrat de fixation (27), le deuxième substrat ayant une troisième surface et une quatrième surface opposée,
(c) la formation d'un premier film protecteur sur la première surface, sauf dans une zone qui deviendra la partie centrale de la membrane élastique,
(d) l'exécution d'une première gravure sur la première surface, en utilisant le premier film protecteur comme masque,
(e) la formation d'un deuxième film protecteur sur la deuxième surface,
(f) l'enlèvement de parties du premier film protecteur à l'exception de celles situées dans les zones de la première surface correspondant au substrat de support et à la partie de joint de soupape à former ultérieurement,
(g) l'exécution, après l'étape (f), d'une deuxième gravure sur la première surface, en utilisant comme masque la partie du premier film protecteur restant après l'étape (f), et l'exécution d'une première gravure sur la deuxième surface, en utilisant le deuxième film protecteur comme masque, ce qui permet de former la membrane élastique (21), la saillie de soupape (29), la partie de joint de soupape (23) et le substrat de support,
(h) l'enlèvement, après l'étape (g), de la partie restante du premier film protecteur et du deuxième film protecteur,
(i) la formation d'un film isolant soit sur une partie de la troisième surface du deuxième substrat (27) soit sur la partie de joint de soupape, et
(j) la liaison anodique, après les étapes (h) et (i). de la troisième surface du deuxième substrat, dans laquelle un orifice d'entrée (16) a été formé, et de la première surface du premier substrat, dans lequel, lorsqu'à l'étape (i) le film isolant est formé sur une partie de la troisième surface, les premier et deuxième substrats sont assemblés de sorte que le film isolant s'oppose à la partie de joint de soupape, et
dans lequel, à l'étape (e), la partie restante du premier film protecteur dans la zone de la première surface correspondant à la partie de joint de soupape à former ultérieurement a une largeur qui n'excède pas 50 µm.

7. Procédé selon la revendication 6, dans lequel le premier substrat est un substrat en silicium monocristallin.

8. Procédé de fabrication d'une microsoupape dans laquelle une membrane élastique (301) se déplace verticalement en cas de variation de pression, un substrat de support (305) supporte la membrane élastique, un substrat de fixation (306) maintient le substrat de support et une saillie de soupape (309) est disposée sur le substrat de fixation et a une partie de joint de soupape (307) qui exécute une commande du fluide, dans laquelle la membrane (301) est formée intégralement avec le substrat de support (305),
le procédé comprenant les étapes qui consistent en:
(a) la préparation d'un premier substrat (305) qui deviendra le substrat de support et la membrane (305), le premier substrat ayant une première surface et une deuxième surface opposée,
(b) la préparation d'un deuxième substrat (306) qui deviendra le substrat de fixation, le deuxième substrat ayant une troisième surface et une quatrième surface opposée,
(c) la formation d'un premier film protecteur (350) sur la première surface dans une zone correspondant au substrat de support à former ultérieurement,
(d) l'exécution d'une première gravure sur la première surface, en utilisant le premier film protecteur (350) comme masque,
(e) la formation d'un deuxième film protecteur (351) sur la deuxième surface, sauf dans une zone correspondant à la partie centrale de la membrane élastique (301) à former ultérieurement,
(f) l'exécution, après les étapes (c) à (e), d'une deuxième gravure, en utilisant le premier film protecteur (350) et le deuxième film protecteur (351) comme masques sur les première et deuxième surfaces jusqu'à ce que la zone correspondant à la partie centrale de la membrane élastique (301) soit ouverte,
(g) la formation d'un troisième film protecteur (355) sur la troisième surface du deuxième substrat (306) dans une zone correspondant à la saillie de soupape (309) à former ultérieurement,
(h) l'exécution d'une troisième gravure sur deuxième substrat (306), en utilisant le troisième film protecteur (355) comme masque pour ainsi former la saillie de soupape (309) et la partie de joint de soupape (307),
(i) la formation d'un film isolant soit sur la partie de joint de soupape soit sur une partie de la deuxième surface,
(j) la formation d'un orifice d'entrée (308) pénétrant dans le deuxième substrat (306) de la troisième surface vers la quatrième surface, et
(k) la liaison anodique, après les étapes (f) et (j), de la deuxième surface du deuxième substrat (306) et de la troisième surface du premier substrat (305), dans lequel, lorsqu'à l'étape (i) le film isolant est formé sur une partie de la deuxième surface, les premier et deuxième substrats sont assemblés de sorte que le film isolant s'oppose à la partie de joint de soupape.

9. Procédé selon la revendication 8, dans lequel l'étape (e) comprend la formation d'un film isolant (352) sur la deuxième surface et la formation postérieure du deuxième film protecteur (351) sur le film isolant (352), et l'étape (i) comprend l'enlèvement sélectif du film isolant (352) par gravure sauf sur la partie de la deuxième surface.

10. Procédé selon la revendication 8 ou 9, dans lequel le premier substrat (305) est un substrat en silicium monocristallin et le deuxième substrat (306) est un substrat en verre.

11. Micropompe ayant une partie d'entrée (811) munie d'une soupape d'entrée, une partie d'entraînement (812) munie d'une membrane d'entraînement (710) et une partie de sortie (810) munie d'une soupape de sortie, la soupape d'entrée étant composée de l'une quelconque des microsoupapes selon les revendications 1 à 6.

12. Micropompe selon la revendication 11, dans laquelle la soupape d'entrée, la membrane d'entraînement et la soupape de sortie sont formées intégralement à partir d'un substrat en silicium monocristallin (71).

13. Procédé de fabrication d'une micropompe ayant une partie d'entrée (811) munie d'une soupape d'entrée, une partie d'entraînement (812) munie d'une membrane d'entraînement et une partie de sortie (810) munie d'une soupape de sortie, le procédé de fabrication de la soupape d'entrée étant l'un quelconque des procédés de fabrication selon les revendications 6 à 10.

14. Dispositif muni d'un réservoir (160) qui reçoit du fluide, d'une micropompe selon la revendication 11 ou 12 connectée au réservoir et aspirant / déchargeant le fluide, d'un moyen d'entraînement (170) qui entraîne la micropompe et d'un moyen de commande (180) qui commande le moyen d'entraînement.
